# EUROPEAN PATENT SPECIFICATION

(11) **EP 4 478 311 B1**
(45) Date of publication and mention of the grant of the patent: **25.11.2026**
(21) Application number: 22930255.9
(22) Date of filing: 08.03.2022
(51) Int. Cl.: G08B 7/06, G08B 21/24, G08B 25/10, B60Q 9/00, G01S 13/76, H04W 4/02, G08B 21/22, G07C 9/00

(54) **COMMUNICATION METHOD, SYSTEM, AND DEVICE**
KOMMUNIKATIONSVERFAHREN, SYSTEM UND VORRICHTUNG
PROCÉDÉ DE COMMUNICATION, SYSTÈME ET DISPOSITIF

(43) Date of publication of application: 18.12.2024
(73) Proprietor: Huawei Technologies Co., Ltd., Shenzhen, Guangdong 518129 (CN)
(72) Inventor: WANG, Yali, Shenzhen, Guangdong 518129 (CN); LI, Dejian, Shenzhen, Guangdong 518129 (CN); CHENG, Xingqing, Shenzhen, Guangdong 518129 (CN)
(74) Representative: Maiwald GmbH
(86) International application number: PCT/CN2022/079794
(87) International publication number: WO 2023/168609

(56) References cited:
- CN-A- 109 466 443
- CN-A- 111 886 515
- CN-A- 113 593 204
- JP-A- 2013 127 737
- JP-A- 2014 152 458
- US-A1- 2019 346 531
- US-A1- 2019 364 404

## Description

### TECHNICAL FIELD

This application relates to the field of vehicle technologies, and in particular, to a communication method, system, and apparatus.

### BACKGROUND

As the automobile industry develops rapidly, new intelligent vehicles, such as fuel vehicles and electric vehicles, have entered lives of many people as a preferred choice of transportation means for people to travel, and gradually become one of household or personal consumer products.

With deep integration of the information and communication technology (information and communication technology, ICT) industry and traditional automobile enterprises, interaction between a passenger cockpit system and a driver or a passenger has been gradually promoted and put into commercial use. For example, an interaction operation between a mobile phone navigation application (application, APP) and a central display screen in a cockpit, and an operation of answering or making a call in a vehicle driving process by a driver require a connection and interoperation between an intelligent terminal (for example, an intelligent terminal, a tablet computer, or a notebook computer) and a vehicle-mounted terminal peripheral. However, information exchange performed by connecting the intelligent terminal to the vehicle-mounted terminal peripheral further brings problems. Because a physical connection is usually required for interoperation between the intelligent terminal and the vehicle-mounted terminal peripheral, the driver or the passenger habitually places the intelligent terminal at a fixed position in the cockpit. Consequently, when the driver or the passenger leaves the vehicle after parking, the intelligent terminal is usually left in the vehicle. In addition, there are frequent cases in which an infant or a young child is left in a vehicle due to parents' negligence. The vehicle has a child lock, and the infant or young child cannot open a vehicle door from the inside. In this case, the infant or young child cannot effectively call for help from the outside. As a result, the child is kept in the vehicle for a long time.

Currently, there are mainly the following types of detection on a target object left in the vehicle. For example, image recognition for an intelligent terminal or living body detection is performed based on an image captured by a camera. However, when a recognized object is blocked, an image recognition-based detection manner is ineffective. For another example, after the vehicle is locked, whether an intelligent terminal is in the vehicle is recognized by detecting whether there is a wired connection to the intelligent terminal. However, when an intelligent terminal without a wired connection to the vehicle is left in the vehicle, the intelligent terminal cannot be effectively detected. For another example, living body detection is performed based on audio or infrared detection and collection. However, when a living body does not make a sound during sleeping, the living body in the vehicle cannot be detected through audio collection. In addition, when a case like interference on infrared detection occurs, the living body in the vehicle cannot be effectively detected through infrared detection. In these manners, the target object left in the vehicle cannot be effectively detected, and consequently, a user cannot be notified in a timely manner.
US 2019/364404 A1 discloses an alert system having a first wireless tag; and a control device capable of being in communication with the first wireless tag, wherein when the control device receives a signal from the wireless tag it is an indication of no event, and when the control device does not receive a signal from the wireless tag it is an indication of an even, thus the control device sends a notification to the user.
US 2019/346531 A1 discloses an improved remote keyless entry (RKE) system for a vehicle to provide enhanced capabilities to a user. The improved RKE system may utilize directional antennas in the vehicle and in the FOB. Directional antennas may utilize devices equipped with orientation-independent antennas to determine the location. The system can exist in many different customizable configurations, sometimes utilizing orientation-independent antennas embedded in the vehicle or the FOB.
JP 2014-152458 A addresses the problem of how to enable a person to prevent mainly misplacing a key in a vehicle, forgetting to lock, and the like without using a LF wave (long wave), comprising: A keyless system for a vehicle includes a trigger switch an on-vehicle machine operating a door lock mechanism and a portable machine. The on-vehicle machine and the portable machine are configured to perform short-distance radio communication. The portable machine is equipped with a motion sensing part capable of sensing a motion of the portable machine itself.
CN 113593204 A discloses a reminding method for preventing articles in a vehicle from being forgotten and electronic equipment. The reminding method for preventing articles in the vehicle from being forgotten comprises the following steps: in response to an event that a user leaves a vehicle, obtaining position information of an article searching accessory fixed on a user article; and if the position information indicates that the object searching accessory is in the vehicle, executing a user reminding operation.
CN 109466443 A relates to the field of vehicle service, in particular to a warning method of a mobile electronic device lost in a vehicle and a vehicle-mounted far-end device of the method. The warning method includes the steps of obtaining locating information, wherein the locating information includes locating information of the mobile electronic device and locating information of a reference object; judging whether a vehicle door is locked or not; judging whether the mobile electronic device is left in the vehicle or not according to the locating information of the mobile electronic device and the locating information of the reference object when itis judged that the vehicle door is locked; sending out a mobile electronic device loss alarm to a user when it is judged that the mobile electronic device is lost in the vehicle.

### SUMMARY

The invention is defined by a communication method, and a communication apparatus and a computer-readable storage medium, thereof. Preferred embodiments are defined in the dependent claims. This application provides a communication method, system, and apparatus, to effectively detect a target object left in a vehicle, and remind a user in a timely manner.

According to a first aspect, this application provides a communication method, where the method is performed by a positioning apparatus. The method includes: The positioning apparatus sends a first radio signal, and receives at least one answer signal that is for the first radio signal and that is from at least one responding device. Then, the positioning apparatus sends information corresponding to the at least one answer signal to a control apparatus, where the information of the first answer signal indicates that a target object is located in a vehicle.

According to the method, the positioning apparatus communicates with the responding device by sending the first radio signal, receives the at least one answer signal that is for the first radio signal and that is from the at least one responding device, and then sends, to the control device, the information that indicates that the target object is located in the vehicle, so that the control apparatus outputs a reminder indication signal after receiving the information. The reminder indication signal is used to indicate at least one outputting apparatus to output a reminder signal. This helps effectively detect whether the target object is located in the vehicle, and remind the user in a timely manner when the target object is left in the vehicle.

In a possible design, the first radio signal may be a first radio distance measurement signal, and the information corresponding to the at least one answer signal may be first distance measurement information that indicates a distance from the positioning apparatus to the at least one responding device.

In a possible design, when the at least one responding device includes a vehicle key and the target object, that the positioning apparatus receives at least one answer signal that is for the first radio signal and that is from at least one responding device may include: The positioning apparatus receives a first radio answer signal from the vehicle key; and receives a second radio answer signal from the target object, where the first distance measurement information indicates a first distance from the positioning apparatus to the vehicle key and a second distance from the positioning apparatus to the target object. In this design, the positioning apparatus may separately communicate with the vehicle key and the target object, to determine a difference between the distance from the positioning apparatus to the vehicle key and the distance from the positioning apparatus to the target object, thereby determining, based on the difference, whether the target object is left in the vehicle.

In a possible design, the method further includes: The control apparatus determines that a difference between the first distance and the second distance is greater than or equal to a first threshold, to output the reminder indication signal, where the reminder indication signal is used to indicate the at least one outputting apparatus to output the reminder signal. In this design, the difference between the distance from the positioning apparatus to the vehicle key and the distance from the positioning apparatus to the target object is determined. If the difference is greater than or equal to the first threshold, it indicates that the target object is left in the vehicle, so that the control apparatus outputs the reminder indication signal to indicate the at least one outputting apparatus to output the reminder signal, to remind the user when the target object is left in the vehicle. If the difference is less than the first threshold, it indicates that the target object is not left in the vehicle, so that the control apparatus does not output the reminder indication signal.

In a possible design, the at least one responding device includes the target object, and that the positioning apparatus receives at least one answer signal that is for the first radio signal and that is from at least one responding device may include: The positioning apparatus receives a second radio answer signal from the target object, where the first distance measurement information indicates a second distance from the positioning apparatus to the target object. In this design, the distance between the positioning apparatus and the target object is determined through communication between the positioning apparatus and the target object, to determine, by using the positioning apparatus and the target object, whether the target object is left in the vehicle.

In a possible design, the method further includes: The control apparatus determines that the second distance is greater than or equal to a second threshold, to output the reminder indication signal, where the reminder indication signal is used to indicate the at least one outputting apparatus to output the reminder signal, to indicate the at least one outputting apparatus to output the reminder signal, for reminding the user when the target object is left in the vehicle. If the second distance is less than the second threshold, it indicates that the target object is not left in the vehicle, so that the control apparatus does not output the reminder indication signal.

In a possible design, that the positioning apparatus sends a first radio signal may include: the positioning apparatus sends the first radio signal according to a first period, or sends the first radio signal according to a first rule. In this design, the positioning apparatus may periodically send the first radio signal, or send the first radio signal according to a specific rule, to remind the user in a timely manner when the target object is left in the vehicle.

In a possible design, that the positioning apparatus sends a first radio signal may include: The positioning apparatus sends the first radio signal in response to a first distance measurement request, where the first distance measurement request is from a central controller. In this design, the positioning apparatus may be triggered, by using the first distance measurement request, to perform distance measurement, so that distance measurement can be performed as required, and power consumption can be reduced compared with periodicity.

In a possible design, the first distance measurement information includes one or more of the following pieces of content:
time at which the positioning apparatus sends the first radio signal;
time at which the at least one responding device receives the first radio signal;
time at which the positioning apparatus receives the at least one answer signal;
time at which the at least one responding device sends the at least one answer signal;
at least one time interval between the time at which the positioning apparatus sends the first radio signal and the time at which the positioning apparatus receives the at least one answer signal; and
at least one time interval between the time at which the at least one responding device receives the first radio signal and the time at which the at least one responding device sends the at least one answer signal.

In a possible design, the at least one answer signal indicates one or more of the following pieces of content:
the time at which the at least one responding device receives the first radio signal;
the time at which the at least one responding device sends the at least one answer signal; and
the at least one time interval between the time at which the at least one responding device receives the first radio signal and the time at which the at least one responding device sends the at least one answer signal.

In a possible design, the target object includes an intelligent terminal or a seat having a wireless communication module.

According to a second aspect, this application provides a communication method, and the method is performed by a control apparatus. The method includes: The control apparatus receives information that corresponds to at least one answer signal and that is from a positioning apparatus, where the information corresponding to the at least one answer signal indicates that a target object is located in a vehicle; and the control apparatus outputs a reminder indication signal based on the information corresponding to the at least one answer signal, where the reminder indication signal is used to indicate at least one outputting apparatus to output a reminder signal.

According to the method, after receiving the information corresponding to the at least one answer signal, the control apparatus may output the reminder indication signal to indicate the at least one outputting apparatus to output the reminder signal, to effectively detect whether the target object is in the vehicle, and remind a user in a timely manner.

In a possible design, the information corresponding to the at least one answer signal may be first distance measurement information, and the first distance measurement information indicates a distance from the positioning apparatus to the at least one responding device. After receiving the first distance measurement information from the positioning apparatus, the control apparatus outputs the reminder indication signal based on the first distance measurement information, where the reminder indication signal is used to indicate the at least one outputting apparatus to output the reminder signal. In this design, the reminder indication signal is output based on the distance that is from the positioning apparatus to the at least one responding device and that is indicated in the first distance measurement information, so that the user can be reminded in a timely manner when the target object is left in the vehicle.

In a possible design, the at least one responding device includes a vehicle key and the target object, and the first distance measurement information indicates a first distance from the positioning apparatus to the vehicle key and a second distance from the positioning apparatus to the target object. In this design, the control apparatus may determine, based on the first distance measurement information, whether the target object is left in the vehicle, to remind the user in a timely manner when the target object is left in the vehicle.

In a possible design, that the control apparatus outputs a reminder indication signal based on the first distance measurement information includes: The control apparatus determines that a difference between the first distance and the second distance is greater than or equal to a first threshold, to output the reminder indication signal. In this design, the difference between the distance from the positioning apparatus to the vehicle key and the distance from the positioning apparatus to the target object is determined. If the difference is greater than or equal to the first threshold, it indicates that the target object is left in the vehicle, so that the control apparatus outputs the reminder indication signal to indicate the at least one outputting apparatus to output the reminder signal, to remind the user when the target object is left in the vehicle. If the difference is less than the first threshold, it indicates that the target object is not left in the vehicle, so that the control apparatus does not output the reminder indication signal.

In a possible design, the at least one responding device includes the target object, and the first distance measurement information indicates a second distance from the positioning apparatus to the target object. In this design, the control apparatus may determine, based on the first distance measurement information, whether the target object is left in the vehicle, to remind the user in a timely manner when the target object is left in the vehicle.

In a possible design, that the control apparatus outputs a reminder indication signal based on the first distance measurement information includes: The control apparatus determines that the second distance is greater than or equal to a second threshold, to output the reminder indication signal to indicate the at least one outputting apparatus to output the reminder signal, for reminding the user when the target object is left in the vehicle. If the second distance is less than the second threshold, it indicates that the target object is not left in the vehicle, so that the control apparatus does not output the reminder indication signal.

In a possible design, before the control apparatus receives the first distance measurement information from the positioning apparatus, the control apparatus may further send a first distance measurement request to the positioning apparatus, to trigger the positioning apparatus to send a first radio signal.

In a possible design, that the control apparatus sends a first distance measurement request to the positioning apparatus includes: The control apparatus receives a first signal, where the first signal includes a vehicle door opening signal or a vehicle door locking signal; and the control apparatus sends the first distance measurement request to the positioning apparatus in response to the first signal. In this design, when a vehicle door is opened or locked, the positioning apparatus is triggered to perform distance measurement, so that after a driver gets off the vehicle, it can be detected whether the target object is left in the vehicle.

In a possible design, the reminder signal output by the at least one outputting apparatus includes one or more of the following:
an in-vehicle speaker of a vehicle broadcasts a voice reminder;
an atmosphere light of the vehicle blinks for reminding;
a display of the vehicle displays reminder information;
the vehicle key of the vehicle makes a sound or vibrates; and
the target object outputs a sound or vibrates.

In a possible design, the first distance measurement information includes one or more of the following pieces of content:
time at which the positioning apparatus sends the first radio signal, where the first radio signal is used to trigger a responding device that receives the first radio signal to send a corresponding answer signal;
time at which the at least one responding device receives the first radio signal;
time at which the positioning apparatus receives at least one answer signal, where the at least one answer signal is sent by the at least one responding device for the first radio signal;
time at which the at least one responding device sends the at least one answer signal;
at least one time interval between the time at which the positioning apparatus sends the first radio signal and the time at which the positioning apparatus receives the at least one answer signal; and
at least one time interval between the time at which the at least one responding device receives the first radio signal and the time at which the at least one responding device sends the at least one answer signal.

In a possible design, the at least one answer signal indicates one or more of the following pieces of content:
the time at which the at least one responding device receives the first radio signal;
the time at which the at least one responding device sends the at least one answer signal; and
the at least one time interval between the time at which the at least one responding device receives the first radio signal and the time at which the at least one responding device sends the at least one answer signal.

In a possible design, the target object includes an intelligent terminal or a seat having a wireless communication module.

According to a third aspect, this application provides a communication method, the method is performed by a responding device, and the method includes: The responding device receives a first radio signal from a positioning apparatus, and sends an answer signal for the first radio signal to the positioning apparatus.

According to the method, the responding device communicates with the positioning apparatus. In this way, when a target object is left in a vehicle, the positioning apparatus can send, to a control apparatus in a timely manner, information indicating that the target object is in the vehicle, so that the control apparatus outputs a reminder indication signal after receiving the information, where the reminder indication signal is used to indicate at least one outputting apparatus to output a reminder signal. This helps effectively detect whether the target object is in the vehicle and remind a user in a timely manner.

In a possible design, the responding device includes one or more of the following:
a vehicle key;
an intelligent terminal; and
a seat having a wireless communication module.

In a possible design, the responding device is the seat having the wireless communication module, and a pressure sensor or a switch is disposed in the seat. That the responding device receives a first radio signal from a positioning apparatus may include: When a pressure detected by the pressure sensor is greater than or equal to a pressure threshold or the switch is in an on state, the responding device receives the first radio signal from the positioning apparatus through the wireless communication module. That the responding device sends an answer signal for the first radio signal to the positioning apparatus may include: The responding device sends the answer signal for the first radio signal to the positioning apparatus through the wireless communication module.

In this design, whether a living body is left in the vehicle on the seat can be effectively detected, thereby reminding the user in a timely manner when the target object is left in the vehicle.

According to a fourth aspect, this application provides a communication system, where the communication system includes a positioning apparatus and a control apparatus that are located in a vehicle.

The positioning apparatus is configured to: send a first radio signal; receive at least one answer signal that is for the first radio signal and that is from at least one responding device; and send first distance measurement information corresponding to the at least one answer signal to the control apparatus, where the first distance measurement information indicates a distance from the positioning apparatus to the at least one responding device.

The control apparatus is configured to: receive the first distance measurement information from the positioning apparatus, to output a reminder indication signal based on the first distance measurement information, where the reminder indication signal is used to indicate at least one outputting apparatus to output a reminder signal.

In a possible design, the at least one responding device includes a vehicle key and a target object, and the positioning apparatus is specifically configured to: receive a first radio answer signal from the vehicle key; and receive a second radio answer signal from the target object, where the first distance measurement information indicates a first distance from the positioning apparatus to the vehicle key and a second distance from the positioning apparatus to the target object.

In a possible design, the control apparatus is specifically configured to determine that a difference between the first distance and the second distance is greater than or equal to a first threshold, to output the reminder indication signal.

In a possible design, the at least one responding device includes a target object, and the first distance measurement information indicates a second distance from the positioning apparatus to the target object. The positioning apparatus is specifically configured to receive a second radio answer signal from the target object, where the first distance measurement information indicates the second distance from the positioning apparatus to the target object.

In a possible design, the control apparatus is specifically configured to determine that the second distance is greater than or equal to a second threshold, to output the reminder indication signal.

In a possible design, the control apparatus is further configured to send a first distance measurement request to the positioning apparatus. The positioning apparatus is specifically configured to send the first radio signal in response to the first distance measurement request.

In a possible design, the control apparatus is specifically configured to: receive a first signal, where the first signal includes a vehicle door opening signal or a vehicle door locking signal; and send the first distance measurement request to the positioning apparatus in response to the first signal.

In a possible design, the positioning apparatus is specifically configured to: send the first radio signal according to a first period, or send the first radio signal according to a first rule.

In a possible design, the first distance measurement information includes one or more of the following pieces of content: time at which the positioning apparatus sends the first radio signal; time at which the at least one responding device receives the first radio signal; time at which the positioning apparatus receives the at least one answer signal; time at which the at least one responding device sends the at least one answer signal; at least one time interval between the time at which the positioning apparatus sends the first radio signal and the time at which the positioning apparatus receives the at least one answer signal; and at least one time interval between the time at which the at least one responding device receives the first radio signal and the time at which the at least one responding device sends the at least one answer signal.

In a possible design, the at least one answer signal indicates one or more of the following pieces of content:
the time at which the at least one responding device receives the first radio signal;
the time at which the at least one responding device sends the at least one answer signal; and
the at least one time interval between the time at which the at least one responding device receives the first radio signal and the time at which the at least one responding device sends the at least one answer signal.

In a possible design, the target object includes an intelligent terminal or a seat having a wireless communication module.

In a possible design, the communication system further includes the seat having the wireless communication module, a pressure sensor or a switch is disposed in the seat, and the seat having the wireless communication module is specifically configured to: when a pressure detected by the pressure sensor is greater than or equal to a pressure threshold or the switch is in an on state, receive the first radio signal from the positioning apparatus through the wireless communication module; and send the answer signal for the first radio signal to the positioning apparatus through the wireless communication module.

According to a fifth aspect, this application provides a communication apparatus, configured to perform the method according to the foregoing aspects and any possible implementation of the foregoing aspects. Specifically, the communication apparatus may include modules/units configured to perform the method in the foregoing aspects or any possible implementation of the foregoing aspects. These modules/units may be implemented by hardware, or may be implemented by hardware executing corresponding software.

According to a sixth aspect, this application further provides a communication apparatus, where the communication apparatus includes at least one processor and a communication interface, and the communication interface is configured to: receive a signal from a communication apparatus other than the communication apparatus, and transmit the signal to the at least one processor, or send a signal from the at least one processor to a communication apparatus other than the communication apparatus; the at least one processor is configured to implement, by using a logic circuit or executing code instructions, operation steps of the method according to the first aspect or any one of the possible implementations of the first aspect, or operation steps of the method according to the second aspect or any one of the possible implementations of the second aspect, or operation steps of the method according to the third aspect or any one of the possible implementations of the third aspect.

According to a seventh aspect, this application further provides a vehicle, where the vehicle includes an apparatus configured to perform the method according to the first aspect or any one of the possible implementations of the first aspect, and an apparatus configured to perform the method according to the second aspect or any one of the possible implementations of the second aspect; or the vehicle includes an apparatus configured to perform the method according to the first aspect or any one of the possible implementations of the first aspect, an apparatus configured to perform the method according to the second aspect or any one of the possible implementations of the second aspect, and an apparatus configured to perform the method according to the third aspect or any one of the possible implementations of the third aspect.

According to an eighth aspect, this application further provides a computer-readable storage medium. The computer-readable storage medium stores a computer program, and when the computer program is run, operation steps of the method according to the first aspect or any one of the possible implementations of the first aspect are performed, or operation steps of the method according to the second aspect or any one of the possible implementations of the second aspect are performed, or operation steps of the method according to the third aspect or any one of the possible implementations of the third aspect is performed.

According to a ninth aspect, this application further provides a computer program product. The computer program product includes a computer program or instructions, and when the computer program or the instructions is/are executed by a communication apparatus, operation steps of the method according to the first aspect or any one of the possible implementations of the first aspect are performed, or operation steps of the method according to the second aspect or any one of the possible implementations of the second aspect are performed, or operation steps of the method according to the third aspect or any one of the possible implementations of the third aspect are performed.

For beneficial effects of any possible implementation of any one of the fourth aspect to the ninth aspect, refer to beneficial effects of related content in the first aspect to the third aspect. Details are not described herein again.

### BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a diagram of distance detection by using a distance difference according to an embodiment of this application;
FIG. 4 is a diagram of a distance measurement principle according to an embodiment of this application;
FIG. 5 is a diagram of single distance detection according to an embodiment of this application;
FIG. 6 is a diagram of an information processing apparatus according to an embodiment of this application;
FIG. 7 is a diagram of an information processing apparatus according to an embodiment of this application; and
FIG. 8 is a diagram of an information processing apparatus according to an embodiment of this application.

### DESCRIPTION OF EMBODIMENTS

The following further describes in detail this application with reference to accompanying drawings. Apparently, the described embodiments are some rather than all of embodiments of this application. A specific operation method in a method embodiment may also be applied to an apparatus embodiment. In descriptions of embodiments of this application, a person of ordinary skill in the art may understand that various reference numerals such as "first" and "second" in this application are merely used for differentiation for ease of description, and are not used to limit the scope of embodiments of this application, and are not used to represent a sequence. "A plurality of" means two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. At least two means two or more. "At least one", "any one", or a similar expression thereof indicates any combination of the items, including any combination of a single item (piece) or a plurality of items (pieces).

As a function of interaction between a cockpit system of a vehicle and a driver or a passenger is gradually promoted and put into commercial use, interaction between an intelligent terminal and the cockpit system usually requires a physical connection. The driver or the passenger habitually places the intelligent terminal at a fixed position in a cockpit. When the driver or the passenger leaves the vehicle after parking, the intelligent terminal is usually left in the vehicle. In addition, there are frequent cases in which an infant or a young child is left in the vehicle due to parents' negligence. The vehicle has a child lock, and the infant or young child cannot open a vehicle door from the inside. In addition, the infant or young child cannot effectively call for help from the outside. As a result, the child is kept in the vehicle for a long time. Currently, there are mainly the following detection manners for the intelligent terminal or a living body left in the vehicle in the foregoing scenario. For example, image recognition for the intelligent terminal or living body detection is performed based on an image captured by a camera. However, when a recognized object is blocked, an image recognition-based detection manner is ineffective. For another example, after the vehicle is locked, whether the intelligent terminal is in the vehicle is recognized by detecting whether there is a wired connection to an intelligent terminal in the vehicle. However, when an intelligent terminal without a wired connection to the vehicle is left in the vehicle, the intelligent terminal cannot be effectively detected. For another example, living body detection is performed based on audio or infrared detection and collection. However, when the living body does not make a sound during sleeping, the living body in the vehicle cannot be detected through audio collection. In addition, when a case like interference on infrared detection occurs, the living body in the vehicle cannot be effectively detected through infrared detection. In these manners, a target object left in the vehicle cannot be effectively detected, and consequently, a user cannot be notified in a timely manner.

In view of this, embodiments of this application provide a communication method. In the communication method, a positioning apparatus sends a first radio signal, receives at least one answer signal that is for the first radio signal and that is from at least one responding device, and sends information corresponding to the at least one answer signal to the control apparatus, where the information of the first answer signal indicates that a target object is located in a vehicle. Then, a control apparatus may output a reminder signal indication based on the information of the at least one answer signal, where the reminder indication signal is used to indicate at least one outputting apparatus to output a reminder signal. In this way, an intelligent terminal or a living body left in the vehicle can be effectively detected, and a user can be reminded in a timely manner.

The following provides a communication system to which embodiments of this application are applicable. The communication system includes a control apparatus, a positioning apparatus, an outputting apparatus, and a responding device.

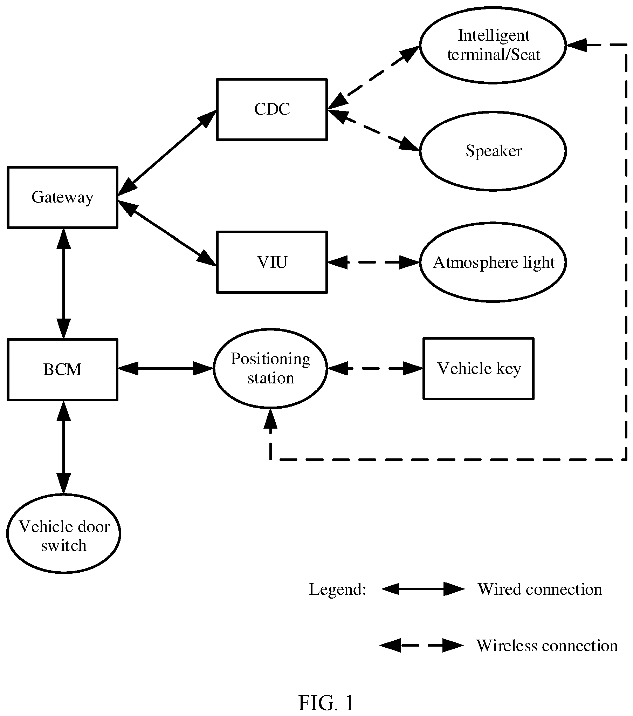

The control apparatus may be configured to perform a function of controlling a turn light, a tire pressure, and a door lock, and may further receive information that corresponds to at least one answer signal and that is sent by the positioning apparatus, where the information corresponding to the at least one answer signal indicates that a target object is located in a vehicle. For example, the control apparatus is a body control module (body control module, BCM) in FIG. 1 or a function module in a BCM.

The positioning apparatus may be configured to perform wireless distance measurement or positioning. In a possible implementation, the positioning apparatus may send a radio signal, and receive an answer signal that is for the radio signal and that is from the responding device. In some scenarios, the positioning apparatus may be a positioning station in FIG. 1. In some other scenarios, the positioning apparatus may be a vehicle key in FIG. 1.

The responding device is configured to: receive a first radio signal from the positioning apparatus, and send an answer signal for the first radio signal to the positioning apparatus. For example, the responding device is an intelligent terminal (for example, an intelligent terminal). For another example, the responding device is a seat or a child seat.

The outputting apparatus is configured to receive a reminder indication signal from the control apparatus, where the reminder indication signal is used to indicate at least one outputting apparatus to output a reminder signal. The outputting apparatus is, for example, any one or more of an in-vehicle speaker, a display of the vehicle, an atmosphere light, a vehicle key, or an intelligent terminal.

The communication system shown in FIG. 1 may further include another apparatus, for example, an in-vehicle gateway, a cockpit domain controller (cockpit domain controller, CDC), and a vehicle integrated unit (vehicle integrated unit, VIU). The in-vehicle gateway is configured to forward data between different domain control modules. The CDC is configured to perform access management and data exchange for a speaker, a central display screen, a mobile terminal, and the like in a cockpit domain. The VIU is used for a gateway connection and serves as a local computing unit.

It should be understood that FIG. 1 is merely a diagram of an architecture of the communication system. In addition to the BCM, the vehicle key, the CDC, the VIU, and the gateway shown in FIG. 1, the communication system to which embodiments of this application are applicable may further include another device. Details are not listed herein again.

The following describes a communication method provided in embodiments of this application with reference to a flowchart of the method.

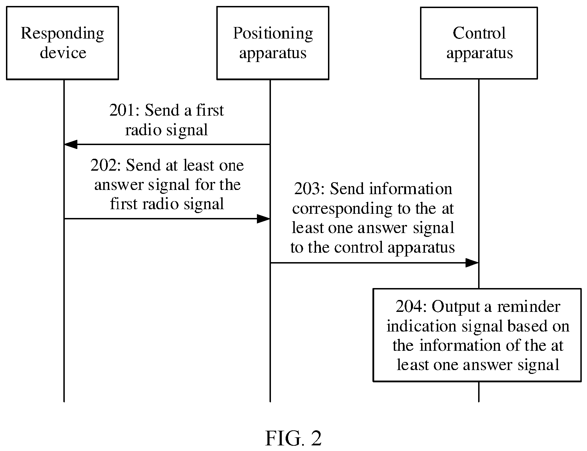

FIG. 2 is a schematic flowchart of a communication method according to an embodiment of this application. As shown in FIG. 2, the method may include the following steps.

Step 201: A positioning apparatus sends a first radio signal. The first radio signal is used to trigger a responding device that receives the first radio signal to send a corresponding answer signal.

Herein, the positioning apparatus may be a positioning apparatus inside a vehicle, for example, the positioning station shown in FIG. 1, or may be the vehicle key shown in FIG. 1. The positioning apparatus may be integrated with another device in the vehicle, or may be independently disposed. This is not specifically limited in this application.

In this embodiment of this application, there are a plurality of possible implementations for sending the first radio signal by the positioning apparatus in step 201. The following provides a possible implementation a1 and a possible implementation a2.

In the possible implementation a1, a control apparatus sends a first distance measurement request to the positioning apparatus; and then after receiving the first distance measurement request, the positioning apparatus sends the first radio signal in response to the first distance measurement request.

The first distance measurement request may be directly or indirectly from a central controller. For example, the central controller may be a vehicle body controller of the vehicle, like the BCM shown in FIG. 1.

In the possible implementation a1, the control apparatus may send the first distance measurement request to the positioning apparatus in the following manner: The control apparatus receives a first signal, where the first signal includes a vehicle door opening signal or a vehicle door locking signal; and then the control apparatus sends the first distance measurement request to the positioning apparatus in response to the first signal.

In the possible implementation a2, the positioning apparatus sends the first radio signal based on a first period, or sends the first radio signal according to a first rule. The first period is, for example, 5s. The first rule is, for example, sending the first radio signal once at an interval of 10s. A specific value of the first period and specific content of the first rule are not limited herein.

After the positioning apparatus sends the first radio signal, at least one responding device receives the first radio signal from the positioning apparatus, and then the at least one responding device performs step 202.

The responding device may include any one of a vehicle key, an intelligent terminal, or a seat having a wireless communication module.

Step 202: The at least one responding device sends at least one answer signal for the first radio signal to the positioning apparatus.

The at least one answer signal indicates one or more of the following (1) to (3):
(1) time at which the at least one responding device receives the first radio signal;
(2) time at which the at least one responding device sends the at least one answer signal; and
(3) at least one time interval between the time at which the at least one responding device receives the first radio signal and the time at which the at least one responding device sends the at least one answer signal.

For example, the at least one answer signal may carry any one or more pieces of content shown in (1) to (3). It should be understood that the "time" in this application may be understood as a moment or a time difference between a moment and a reference time point. This is not specifically limited.

After step 202, the positioning apparatus may receive the at least one answer signal that is for the first radio signal and that is from the at least one responding device. The following provides several possible examples.

In an example, when the at least one responding device includes the vehicle key, the positioning apparatus receives a first radio answer signal from the vehicle key.

In another example, when the at least one responding device includes a target object, the positioning apparatus receives a second radio answer signal from the target object. It should be noted that the target object in this application includes an intelligent terminal or a seat having a wireless communication module. Details are not described below.

In a possible implementation, the responding device is the seat having the wireless communication module, and a pressure sensor or a switch is disposed in the seat. In this case, when pressure detected by the pressure sensor is greater than or equal to a pressure threshold or the switch is in an on state, the responding device receives the first radio signal from the positioning apparatus through the wireless communication module, and then the responding device sends the answer signal for the first radio signal to the positioning apparatus through the wireless communication module. In this way, when receiving the answer signal that is for the first radio signal and that is sent by the wireless communication module in the seat, the positioning apparatus may continue to perform step 203.

In still another example, when the at least one responding device includes the vehicle key and a target object, the positioning apparatus receives a first radio answer signal from the vehicle key and receives a second radio answer signal from the target object.

In some other embodiments, the responding device may alternatively be another device having a wireless communication module in addition to the vehicle key, the intelligent terminal, and the seat having the wireless communication module. Details are not described herein again.

Step 203: The positioning apparatus sends information corresponding to the at least one answer signal to the control apparatus.

The information corresponding to the at least one answer signal may indicate that the target object is located in the vehicle.

For example, the first radio signal in step 201 may be a radio distance measurement signal, the information corresponding to the at least one answer signal may be first distance measurement information, and the first distance measurement information indicates a distance from the positioning apparatus to the at least one responding device. The following provides two possible implementations to describe the first distance measurement information.

In a possible implementation b1, the at least one responding device includes the vehicle key and the target object, and the first distance measurement information indicates a first distance from the positioning apparatus to the vehicle key and a second distance from the positioning apparatus to the target object.

In a possible implementation b2, the at least one responding device includes the target object, and the first distance measurement information indicates a second distance from the positioning apparatus to the target object.

Based on the foregoing content, the first distance measurement information includes one or more of the following (1) to (6):
(1) time at which the positioning apparatus sends the first radio signal;
(2) the time at which the at least one responding device receives the first radio signal;
(3) time at which the positioning apparatus receives the at least one answer signal;
(4) the time at which the at least one responding device sends the at least one answer signal;
(5) at least one time interval between the time at which the positioning apparatus sends the first radio signal and the time at which the positioning apparatus receives the at least one answer signal; and
(6) the at least one time interval between the time at which the at least one responding device receives the first radio signal and the time at which the at least one responding device sends the at least one answer signal.

In this embodiment of this application, the first distance from the positioning apparatus to the vehicle key and the second distance from the positioning apparatus to the target object may be determined based on the foregoing (1) to (6) included in the first distance measurement information.

In an example, the responding device is the vehicle key, and the first distance measurement information may include the time at which the positioning apparatus sends the first radio signal, time at which the vehicle key receives the first radio signal, time at which the vehicle key sends the answer signal, and time at which the positioning apparatus receives the answer signal sent by the vehicle key. The first distance measurement information may alternatively include a time interval between the time at which the positioning apparatus sends the first radio signal and time at which the positioning apparatus receives the answer signal sent by the vehicle key, and a time interval between time at which the vehicle key receives the first radio signal and time at which the vehicle key sends the answer signal. In this case, computing resources can be reduced when the control apparatus calculates the distance from the positioning apparatus to the vehicle key. It should be understood that the example may further be applicable to another responding device.

It should be noted that in step 203, the control apparatus may be a control apparatus inside the positioning apparatus, or may be a control apparatus outside the positioning apparatus, for example, the central controller of the vehicle.

After the positioning apparatus sends the information corresponding to the at least one answer signal to the control apparatus, the control apparatus may receive the information corresponding to the at least one answer signal from the positioning apparatus, and then the control apparatus performs step 204.

Step 204: The control apparatus outputs a reminder indication signal based on the information corresponding to the at least one answer signal. The reminder indication signal is used to indicate at least one outputting apparatus to output a reminder signal.

When the information corresponding to the at least one answer signal is the first distance measurement information, step 204 may be replaced with that the control apparatus outputs a reminder indication signal based on the first distance measurement information. The following provides several possible implementations.

In a possible implementation c1, based on the foregoing possible implementation b1, the first distance measurement information indicates the first distance from the positioning apparatus to the vehicle key and the second distance from the positioning apparatus to the target object, and the control apparatus determines that a difference between the first distance and the second distance is greater than or equal to a first threshold, to output the reminder indication signal. It should be understood that in this case, the reminder indication signal is output when the difference is greater than or equal to the first threshold, and the indication signal is not output when the difference is less than the first threshold. In some other embodiments, it may alternatively be set that the reminder indication signal is output when the difference is greater than the first threshold, and the indication signal is not output when the difference is less than or equal to the first threshold. Based on a similar principle, a comparison between the second distance and the second threshold and a comparison between the pressure and the pressure threshold are not described again.

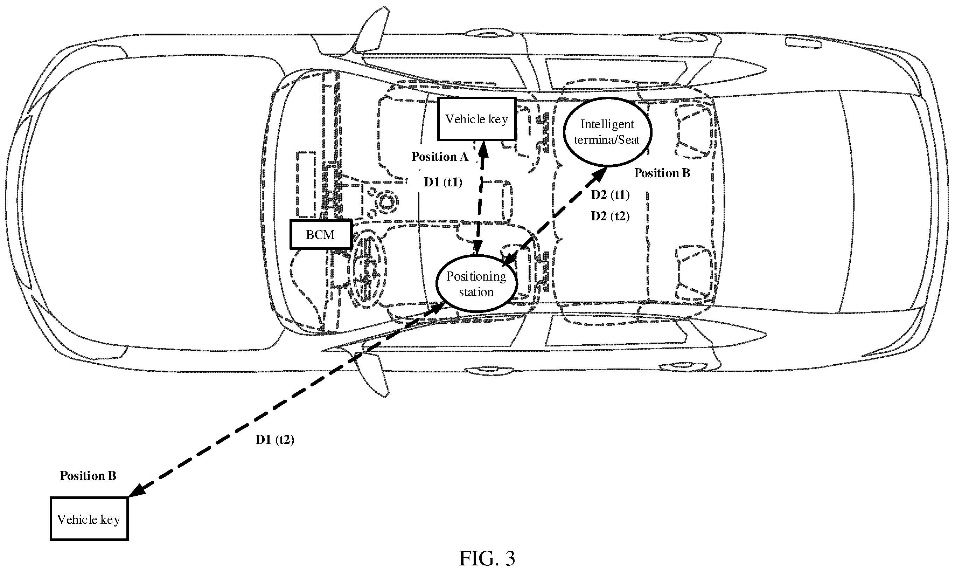

In the diagram of distance measurement by using a distance difference shown in FIG. 3, an example in which the positioning apparatus is a positioning station, the responding devices are the intelligent terminal and the vehicle key, and the control apparatus is a BCM is used. At time t1, a driver is in the vehicle. In this case, both the vehicle key and the intelligent terminal are in the vehicle, a distance from the positioning station to the vehicle key is D1 (t1), a distance from the positioning station to the intelligent terminal is D2 (t1), and a distance difference between D1 (t1) and D2 (t1) is less than the first threshold. However, at time t2, after the driver leaves the vehicle, the vehicle key is outside the vehicle. If the intelligent terminal is left in the vehicle, at this time, the distance from the positioning station to the vehicle key is D1 (t2), the distance from the positioning station to the intelligent terminal is D2 (t2), and a difference between D1 (t2) and D2 (t2) is greater than the first threshold. Therefore, whether the target object is left in the vehicle may be determined by separately determining the distance from the positioning station to the vehicle key and the distance from the positioning station to the intelligent terminal, and reminding is performed in a timely manner when the target object is left in the vehicle.

The distance from the positioning station to the vehicle key and the distance from the positioning station to the intelligent terminal may be determined based on the first distance measurement information.

For example, the first distance measurement information may include time at which the positioning station sends the first radio signal, time at which the vehicle key receives the first radio signal, time at which the intelligent terminal receives the first radio signal, time at which the vehicle key sends the first radio answer signal, time at which the intelligent terminal sends the second radio answer signal, time at which the positioning station receives the first radio answer signal sent by the vehicle key, and time at which the positioning station receives the second radio answer signal sent by the intelligent terminal.

After receiving the first distance measurement information, the BCM may determine the distance from the positioning station to the vehicle key and the distance from the positioning station to the intelligent terminal based on the times in the first distance measurement information.

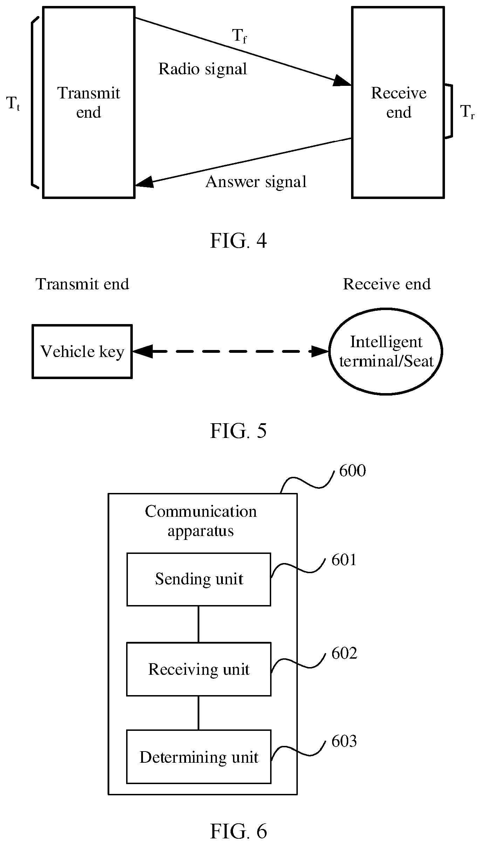

The following describes a manner of calculating a distance between a transmit end and a receive end. In a diagram of a distance measurement principle shown in FIG. 4, a one-way time of flight is first calculated. A one-way time of flight between the transmit end (for example, the positioning station) and the receive end (for example, the vehicle key) may be calculated according to the following formula (1): ${T}_{f} = \left({T}_{t}-{T}_{r}\right) / 2$ (1)

Herein, Tₜ is a time interval between time at which the transmit end sends the first radio signal and time at which the transmit end receives an answer signal. T_{f} is a time interval between the time at which the transmit end sends the first radio signal and time at which the receive end receives the first radio signal, or may be a time interval between time at which the receive end sends the answer signal to the time at which the transmit end receives the answer signal. Tᵣ is a time interval between the time at which the receive end receives the first radio signal and the time at which the receive end sends the answer signal.

After the one-way time of flight is determined, a distance D between the transmit end and the receive end may be calculated according to the following formula (2): $D = c \times {T}_{f 1}$ (2)

Herein, c is a transmission speed of an electromagnetic wave, and T_{f} is a one-way time of flight between the positioning station and the vehicle key.

For example, a time interval Tₜ₁ between the time at which the positioning station sends the first radio signal and the time at which the positioning station receives the answer signal sent by the vehicle key is determined based on the time at which the positioning station sends the first radio signal and the time at which the positioning station receives the first radio answer signal sent by the vehicle key that are included in the first distance measurement information. In addition, a time interval Tᵣ₁ between the time at which the vehicle key receives the first radio signal and the time at which the vehicle key sends the answer signal is determined based on the time at which the vehicle key receives the first radio signal and the time at which the vehicle key sends the first answer signal. T_{f1} may be obtained through calculation by respectively substituting Tₜ₁ and Tᵣ₁ into the right side of the equation in the foregoing formula (1), and the distance D1 between the positioning station and the vehicle key may be obtained through calculation by substituting T_{f1} into the right side of the foregoing formula (2).

Based on a similar principle, after receiving the first distance measurement information, the BCM may determine, based on the time at which the positioning station sends the first radio signal and the time at which the positioning station receives the first radio answer signal sent by the intelligent terminal that are included in the first distance measurement information, a time interval Tₜ₂ between the time at which the positioning station sends the first radio signal and the time at which the positioning station receives the answer signal sent by the intelligent terminal; determine, based on the time at which the intelligent terminal receives the first radio signal and the time at which the intelligent terminal sends the first answer signal, a time interval Tᵣ₂ between the time at which the intelligent terminal receives the first radio signal and the time at which the intelligent terminal sends the answer signal; and respectively substitute Tₜ₂ and Tᵣ₂ into the foregoing formula (1) to obtain a one-way time of flight T_{f2} between the positioning station and the intelligent terminal through calculation, and substitute T_{f2} into the foregoing formula (2) to obtain the distance D2 between the positioning station and the intelligent terminal through calculation.

Then, the BCM determines whether a difference between the distance D1 and the distance D2 is greater than or equal to the first threshold. If the difference is greater than or equal to the first threshold, the BCM outputs the reminder indication signal; or if the difference is less than the first threshold, the BCM does not output the reminder indication signal.

According to the foregoing example, when the intelligent terminal is left in the vehicle, it can be effectively detected that the intelligent terminal is left in the vehicle, and reminding is performed in a timely manner.

In the foregoing example, if the responding device is the seat having the wireless communication module, it may alternatively be detected, in the foregoing manner, whether there is a living body left in the vehicle. Specifically, only when the seat having the wireless communication module detects that the pressure is greater than or equal to the pressure threshold or the switch of the wireless communication module is in the on state, the wireless communication module receives the first radio signal from the positioning apparatus, and sends the answer signal for the first radio signal. In other words, when the living body is on the seat, detection may be performed by using a value relationship between the first threshold and a distance difference between the seat and the vehicle key. When the living body leaves the seat, the seat detects that the pressure is less than the pressure threshold or the switch of the wireless communication module is in an off state. In this case, the wireless communication module no longer receives the first radio signal, no longer sends the answer signal, and no longer detects the target object. In this embodiment of this application, the switch of the wireless communication module may be manually turned on or off. In this case, after the living body is seated on the seat, the wireless communication module in the seat may be manually turned on, and after the life body leaves the seat, the wireless communication module in the seat may be manually turned off. The switch of the wireless communication module may alternatively be automatically turned on or off. For example, after a passenger enters the vehicle and takes the seat, the wireless communication module is automatically triggered to turn on, or the wireless communication module may be automatically triggered to turn on by locking a vehicle door.

In the foregoing implementation, a radio signal distance measurement technology is used to separately measure the distance from the intelligent terminal (or the seat embedded with the wireless communication module) placed at any position in the vehicle to the positioning station and the distance from the vehicle key to the positioning station, and then whether the intelligent terminal (or the living body) is left in the vehicle is determined based on a comparison between the first threshold and a difference between the distances.

In a possible implementation c2, based on the foregoing possible implementation b2, the first distance measurement information indicates the second distance from the positioning apparatus to the target object, and the control apparatus determines that the second distance is greater than or equal to a second threshold, to output the reminder indication signal.

As shown in FIG. 5, an example in which the positioning apparatus is the vehicle key, and the responding device is the intelligent terminal is used. The first distance measurement information may include time at which the vehicle key sends the first radio signal, time at which the intelligent terminal receives the first radio signal, time at which the intelligent terminal sends the second radio answer signal, and time at which the vehicle key receives the second radio answer signal sent by the intelligent terminal.

Based on the distance measurement principle shown in FIG. 4, a second distance from the vehicle key to the intelligent terminal is obtained through calculation. When the second distance is greater than or equal to the second threshold, the reminder indication signal is output; or when the second distance is less than the second threshold, the reminder indication signal is not output.

In the foregoing implementation, a radio signal distance measurement technology is used to measure the distance between the intelligent terminal (or a seat embedded with a wireless communication module) and the vehicle key, and then whether the intelligent terminal (or the living body) is left in the vehicle is determined based on a comparison between the second threshold and the distance between the transmit end and the receive end. This implements mutual detection between the intelligent terminal (or the seat embedded with the wireless communication module) and the vehicle key. The implementation may be further applied to a non-in-vehicle scenario, and can implement mutual anti-lost alarm between the intelligent terminal and the vehicle key associated with the intelligent terminal.

In the foregoing embodiment, the reminder signal output by the at least one outputting apparatus includes one or more of the following (1) to (5):
(1) an in-vehicle speaker of the vehicle broadcasts a voice reminder, for example, the BCM sends a signal to a CDC to control the speaker to broadcast a voice;
(2) an atmosphere light of the vehicle blinks for reminding, for example, the BCM sends a signal to a VIU to control atmosphere light to blink;
(3) a display of the vehicle displays reminder information;
(4) the vehicle key of the vehicle makes a sound or vibrates, for example, a buzzer of the key buzzes or the key vibrates; and
(5) the target object outputs a sound or vibrates, for example, a ringtone of a mobile phone, vibration of a mobile phone, or information displayed on a display of the mobile phone.

Based on the foregoing embodiment and a same concept, an embodiment of this application further provides a communication apparatus, configured to perform the steps performed by the positioning apparatus or the responding device in the foregoing method embodiment. For related features, refer to the foregoing method embodiment. Details are not described herein again.

As shown in FIG. 6, a communication apparatus 600 may include a sending unit 601 and a receiving unit 602.

When the communication apparatus is configured to perform the steps performed by the positioning apparatus in the foregoing method embodiment, the sending unit 601 is configured to send a first radio signal; the receiving unit 602 is configured to receive at least one answer signal that is for the first radio signal and that is from at least one responding device; and the sending unit 601 is further configured to send, to a control apparatus, first distance measurement information corresponding to the at least one answer signal, where the first distance measurement information indicates a distance from the positioning apparatus to the at least one responding device.

In a possible implementation, the at least one responding device includes the vehicle key and a target object. The receiving unit 602 is configured to: receive a first radio answer signal from the vehicle key; and receive a second radio answer signal from the target object. The first distance measurement information indicates a first distance from the positioning apparatus to the vehicle key and a second distance from the positioning apparatus to the target object.

In a possible implementation, the communication apparatus 600 further includes a determining unit 603, configured to determine that a difference between the first distance and the second distance is greater than or equal to a first threshold, to output a reminder indication signal, where the reminder indication signal is used to indicate at least one outputting apparatus to output a reminder signal.

In a possible implementation, the at least one responding device includes a target object. The receiving unit 602 is configured to receive, by the positioning apparatus, a second radio answer signal from the target object. The first distance measurement information indicates a second distance from the positioning apparatus to the target object.

In a possible implementation, the determining unit 603 is further configured to determine, by a control apparatus, that the second distance is greater than or equal to a second threshold, to output a reminder indication signal, where the reminder indication signal is used to indicate at least one outputting apparatus to output a reminder signal.

In a possible implementation, the sending unit 601 is further configured to send the first radio signal in response to a first distance measurement request, where the first distance measurement request is from a central controller.

In a possible implementation, the sending unit 601 is specifically configured to: send, by the positioning apparatus, the first radio signal according to a first period, or send the first radio signal according to a first rule.

In a possible implementation, the first distance measurement information includes one or more of the following pieces of content:
time at which the positioning apparatus sends the first radio signal;
time at which the at least one responding device receives the first radio signal;
time at which the positioning apparatus receives the at least one answer signal;
time at which the at least one responding device sends the at least one answer signal;
at least one time interval between the time at which the positioning apparatus sends the first radio signal and the time at which the positioning apparatus receives the at least one answer signal; and
at least one time interval between the time at which the at least one responding device receives the first radio signal and the time at which the at least one responding device sends the at least one answer signal.

In a possible implementation, the at least one answer signal indicates one or more of the following pieces of content:
the time at which the at least one responding device receives the first radio signal;
the time at which the at least one responding device sends the at least one answer signal; and
the at least one time interval between the time at which the at least one responding device receives the first radio signal and the time at which the at least one responding device sends the at least one answer signal.

In a possible implementation, the target object includes an intelligent terminal or a seat having a wireless communication module.

When the communication apparatus is configured to perform the steps performed by the responding device in the foregoing method embodiment, the receiving unit 602 is configured to receive a first radio signal from a positioning apparatus; and the sending unit 601 is configured to send an answer signal for the first radio signal to the positioning apparatus.

In a possible implementation, the communication apparatus 600 includes any one of the following: a vehicle key, an intelligent terminal, and a seat having a wireless communication module.

In a possible implementation, the communication apparatus 600 is the seat having the wireless communication module, and a pressure sensor or a switch is disposed in the seat.

The receiving unit 602 is configured to: when a pressure detected by the pressure sensor is greater than or equal to a pressure threshold or the switch is in an on state, receive the first radio signal from the positioning apparatus through the wireless communication module.

The sending unit 601 is configured to send the answer signal for the first radio signal to the positioning apparatus through the wireless communication module.

Based on the foregoing embodiment and a same concept, an embodiment of this application further provides a communication apparatus, configured to perform the steps performed by the control apparatus in the foregoing method embodiment. For related features, refer to the foregoing method embodiment. Details are not described herein again.

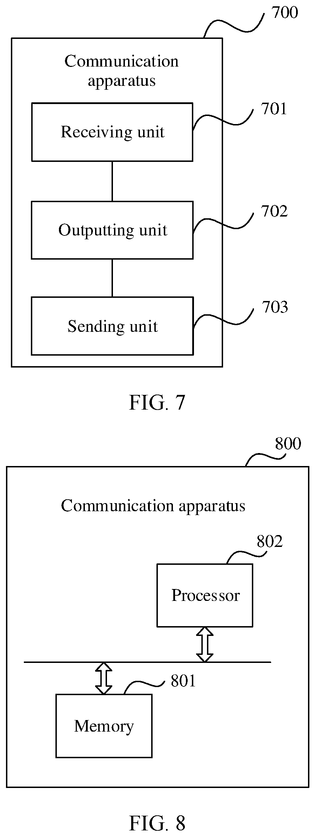

As shown in FIG. 7, a communication apparatus 700 may include a receiving unit 701 and an outputting unit 702, and optionally, further include a sending unit 703.

The receiving unit 701 is configured to receive first distance measurement information from a positioning apparatus, where the first distance measurement information indicates a distance from the positioning apparatus to at least one responding device.

The outputting unit 702 is configured to output a reminder indication signal based on the first distance measurement information, where the reminder indication signal is used to indicate at least one outputting apparatus to output a reminder signal.

In a possible implementation, the at least one responding device includes a vehicle key and a target object, and the first distance measurement information indicates a first distance from the positioning apparatus to the vehicle key and a second distance from the positioning apparatus to the target object.

In a possible implementation, the outputting unit 702 is configured to determine, by the control apparatus, that a difference between the first distance and the second distance is greater than or equal to a first threshold, to output a reminder indication signal.

In a possible implementation, the at least one responding device includes a target object, and the first distance measurement information indicates a second distance from the positioning apparatus to the target object.

In a possible implementation, the outputting unit 702 is configured to determine that the second distance is greater than or equal to a second threshold, to output a reminder indication signal.

In a possible implementation, the sending unit 703 is configured to send a first distance measurement request to the positioning apparatus.

In a possible implementation, the receiving unit 701 receives a first signal, where the first signal includes a vehicle door opening signal or a vehicle door locking signal; and the sending unit 703 is configured to send a first distance measurement request to the positioning apparatus in response to the first signal.

In a possible implementation, the reminder signal output by the at least one outputting apparatus includes one or more of the following:
an in-vehicle speaker of a vehicle broadcasts a voice reminder;
an atmosphere light of the vehicle blinks for reminding;
a display of the vehicle displays reminder information;
the vehicle key of the vehicle makes a sound or vibrates; and
the target object outputs a sound or vibrates.

In a possible implementation, the first distance measurement information includes one or more of the following pieces of content:
time at which the positioning apparatus sends a first radio signal, where the first radio signal is used to trigger a responding device that receives the first radio signal to send a corresponding answer signal;
time at which the at least one responding device receives the first radio signal;
time at which the positioning apparatus receives at least one answer signal;
time at which the at least one responding device sends the at least one answer signal, where the at least one answer signal is sent by the at least one responding device for the first radio signal;
at least one time interval between the time at which the positioning apparatus sends the first radio signal and the time at which the positioning apparatus receives the at least one answer signal; and
at least one time interval between the time at which the at least one responding device receives the first radio signal and the time at which the at least one responding device sends the at least one answer signal.

In a possible implementation, the at least one answer signal indicates one or more of the following pieces of content:
the time at which the at least one responding device receives the first radio signal;
the time at which the at least one responding device sends the at least one answer signal; and
the at least one time interval between the time at which the at least one responding device receives the first radio signal and the time at which the at least one responding device sends the at least one answer signal.

In a possible implementation, the target object includes an intelligent terminal or a seat having a wireless communication module.

According to the foregoing method, FIG. 8 is a diagram of a structure of a communication apparatus according to an embodiment of this application. As shown in FIG. 8, a communication apparatus 800 may be the positioning apparatus, the control apparatus, or the responding device in the foregoing embodiments. The communication apparatus 800 may include a memory 801 and a processor 802, and may further include a bus system. The processor 802 and the memory 801 may be connected through the bus system.

It should be understood that the processor 802 may be a chip. The processor 802 may be a field programmable gate array (field-programmable gate array, FPGA), an application specific integrated circuit (application specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), or a programmable logic device (programmable logic device, PLD) or another integrated chip.

In an implementation process, the steps in the foregoing method may be implemented by using a hardware integrated logic circuit in the processor 802, or by using instructions in a form of software. The steps of the method disclosed with reference to embodiments of this application may be directly performed and completed by a hardware processor, or may be performed and completed by using a combination of hardware in the processor 802 and a software module. The software module may be located in a mature storage medium in the art, for example, a random access memory, a flash memory, a read-only memory, a programmable read-only memory, an electrically erasable programmable memory, or a register. The storage medium is located in the memory 801, and the processor 802 reads information in the memory 801 and completes the steps in the foregoing methods in combination with hardware of the processor.

It should be noted that the processor 802 in this embodiment of this application may be an integrated circuit chip, and has a signal processing capability. In an implementation process, the steps in the foregoing method embodiment may be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory 801 in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and method described in this specification includes but is not limited to these and any memory of another proper type.

This application further provides a vehicle. The vehicle may include the foregoing communication apparatus. In an example, the vehicle may be the vehicle in this application.

Based on the foregoing embodiments and a same concept, an embodiment of this application further provides a communication system. The communication system includes a positioning apparatus and a control apparatus that are located in a vehicle. The positioning apparatus is configured to perform the steps performed by the positioning apparatus in the foregoing method embodiment, and the control apparatus is configured to perform the steps performed by the control apparatus in the foregoing method embodiment.

The positioning apparatus is configured to: send a first radio signal; receive at least one answer signal that is for the first radio signal and that is from at least one responding device; and send first distance measurement information corresponding to the at least one answer signal to the control apparatus, where the first distance measurement information indicates a distance from the positioning apparatus to the at least one responding device.

The control apparatus is configured to: receive the first distance measurement information from the positioning apparatus, to output a reminder indication signal based on the first distance measurement information, where the reminder indication signal is used to indicate at least one outputting apparatus to output a reminder signal.

In a possible design, the at least one responding device includes a vehicle key and a target object, and the positioning apparatus is specifically configured to: receive a first radio answer signal from the vehicle key; and receive a second radio answer signal from the target object, where the first distance measurement information indicates a first distance from the positioning apparatus to the vehicle key and a second distance from the positioning apparatus to the target object.

In a possible design, the control apparatus is specifically configured to determine that a difference between the first distance and the second distance is greater than or equal to a first threshold, to output a reminder indication signal.

In a possible design, the at least one responding device includes a target object, and the first distance measurement information indicates a second distance from the positioning apparatus to the target object. The positioning apparatus is specifically configured to receive a second radio answer signal from the target object, where the first distance measurement information indicates the second distance from the positioning apparatus to the target object.

In a possible design, the control apparatus is specifically configured to determine that the second distance is greater than or equal to a second threshold, to output a reminder indication signal.

In a possible design, the control apparatus is further configured to send a first distance measurement request to the positioning apparatus. The positioning apparatus is specifically configured to send the first radio signal in response to the first distance measurement request.

In a possible design, the control apparatus is specifically configured to: receive a first signal, where the first signal includes a vehicle door opening signal or a vehicle door locking signal; and send the first distance measurement request to the positioning apparatus in response to the first signal.

In a possible design, the positioning apparatus is specifically configured to: send the first radio signal according to a first period, or send the first radio signal according to a first rule.

In a possible design, the first distance measurement information includes one or more of the following pieces of content: time at which the positioning apparatus sends the first radio signal; time at which the at least one responding device receives the first radio signal;
time at which the positioning apparatus receives the at least one answer signal; time at which the at least one responding device sends the at least one answer signal; at least one time interval between the time at which the positioning apparatus sends the first radio signal and the time at which the positioning apparatus receives the at least one answer signal; and at least one time interval between the time at which the at least one responding device receives the first radio signal and the time at which the at least one responding device sends the at least one answer signal.

In a possible design, the at least one answer signal indicates one or more of the following pieces of content:
the time at which the at least one responding device receives the first radio signal;
the time at which the at least one responding device sends the at least one answer signal; and
the at least one time interval between the time at which the at least one responding device receives the first radio signal and the time at which the at least one responding device sends the at least one answer signal.

In a possible design, the target object includes an intelligent terminal or a seat having a wireless communication module.

In a possible design, the communication system further includes the seat having the wireless communication module, a pressure sensor or a switch is disposed in the seat, and the seat having the wireless communication module is specifically configured to: when a pressure detected by the pressure sensor is greater than or equal to a pressure threshold or the switch is in an on state, receive the first radio signal from the positioning apparatus through the wireless communication module; and send the answer signal for the first radio signal to the positioning apparatus through the wireless communication module.

According to the method provided in embodiments of this application, this application further provides a computer program product. The computer program product includes computer program code or instructions. When the computer program code or the instructions is/are run on a computer, the computer is enabled to perform the method in any embodiment of the foregoing method embodiment.

According to the method provided in embodiments of this application, this application further provides a computer-readable storage medium. The computer-readable medium stores program code. When the program code is run on a computer, the computer is enabled to perform the method in any embodiment of the method embodiment.

All or some of the foregoing embodiments may be implemented using software, hardware, firmware, or any combination thereof. When the software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

A person skilled in the art may clearly understand that, for the purpose of convenient and brief description, for a specific working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiments are merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the technical solutions of this application.

The foregoing descriptions are merely specific implementations of this application. Any variation or replacement readily figured out by a person skilled in the art based on the specific implementations provided in this application shall fall within the protection scope of this application.

## Claims

1. A communication method, wherein the method comprises:
sending (S201), by a positioning apparatus, a first radio signal;
receiving (S202), by the positioning apparatus, at least one answer signal that is for the first radio signal and that is from at least one responding device; and
sending (S203), by the positioning apparatus, first distance measurement information corresponding to the at least one answer signal to a control apparatus, wherein
the first distance measurement information indicates a distance from the positioning apparatus to the at least one responding device,
wherein the at least one responding device comprises a vehicle key and a target object; and
the receiving, by the positioning apparatus, at least one answer signal that is for the first radio signal and that is from at least one responding device comprises:
receiving, by the positioning apparatus, a first radio answer signal from the vehicle key; and
receiving, by the positioning apparatus, a second radio answer signal from the target object, wherein
the first distance measurement information indicates a first distance from the positioning apparatus to the vehicle key and a second distance from the positioning apparatus to the target object.

2. The method according to claim 1, wherein the method further comprises:
determining, by the control apparatus, that a difference between the first distance and the second distance is greater than or equal to a first threshold, to output a reminder indication signal, wherein the reminder indication signal is used to indicate at least one outputting apparatus to output a reminder signal.

3. The method according to claim 1, wherein the at least one responding device comprises a target object; and
the receiving, by the positioning apparatus, at least one answer signal that is for the first radio signal and that is from at least one responding device comprises:
receiving, by the positioning apparatus, a second radio answer signal from the target object, wherein
the first distance measurement information indicates a second distance from the positioning apparatus to the target object.

4. The method according to claim 3, wherein the method further comprises:
determining, by the control apparatus, that the second distance is greater than or equal to a second threshold, to output a reminder indication signal, wherein the reminder indication signal is used to indicate at least one outputting apparatus to output a reminder signal.

5. The method according to any one of claims 1 to 4, wherein the sending, by a positioning apparatus, a first radio signal comprises:
sending, by the positioning apparatus, the first radio signal in response to a first distance measurement request, wherein
the first distance measurement request is from a central controller.

6. The method according to any one of claims 1 to 4, wherein the sending, by a positioning apparatus, a first radio signal comprises:
sending, by the positioning apparatus, the first radio signal based on a first period, or sending the first radio signal according to a first rule.

7. The method according to any one of claims 1 to 6, wherein the first distance measurement information comprises one or more of the following pieces of content:
time at which the positioning apparatus sends the first radio signal;
time at which the at least one responding device receives the first radio signal;
time at which the positioning apparatus receives the at least one answer signal;
time at which the at least one responding device sends the at least one answer signal;
at least one time interval between the time at which the positioning apparatus sends the first radio signal and the time at which the positioning apparatus receives the at least one answer signal; and
at least one time interval between the time at which the at least one responding device receives the first radio signal and the time at which the at least one responding device sends the at least one answer signal.

8. The method according to any one of claims 1 to 7, wherein the at least one answer signal indicates one or more of the following pieces of content:
the time at which the at least one responding device receives the first radio signal;
the time at which the at least one responding device sends the at least one answer signal; and
the at least one time interval between the time at which the at least one responding device receives the first radio signal and the time at which the at least one responding device sends the at least one answer signal.

9. The method according to any one of claims 1 to 8, wherein the target object comprises an intelligent terminal or a seat having a wireless communication module.

10. A communication method, wherein the method comprises:
receiving, by a control apparatus, first distance measurement information from a positioning apparatus, wherein the first distance measurement information indicates a distance from the positioning apparatus to at least one responding device; and
outputting, by the control apparatus, a reminder indication signal based on the first distance measurement information, wherein the reminder indication signal is used to indicate at least one outputting apparatus to output a reminder signal,
wherein the at least one responding device comprises a vehicle key and a target object, and the first distance measurement information indicates a first distance from the positioning apparatus to the vehicle key and a second distance from the positioning apparatus to the target object.

11. The method according to claim 10, wherein the outputting, by the control apparatus, a reminder indication signal based on the first distance measurement information comprises:
determining, by the control apparatus, that a difference between the first distance and the second distance is greater than or equal to a first threshold, to output the reminder indication signal.

12. A communication apparatus (600, 700, 800), comprising a processor (802) and a communication interface, wherein the communication interface is configured to: receive a signal from a communication apparatus (600, 700, 800) other than the communication apparatus (600, 700, 800), and transmit the signal to the processor (802), or send a signal from the processor (802) to a communication apparatus (600, 700, 800) other than the communication apparatus (600, 700, 800); and the processor (802) is configured to implement, by using a logic circuit or executing code instructions, the method according to any one of claims 1 to 9, or the method according to claim 10 or 11.

13. A computer-readable storage medium, wherein the computer-readable storage medium stores a computer program, and when the computer program is run, implementing the method according to any one of claims 1 to 9, or implementing the method according to claim 10 or 11.

## Patentansprüche

1. Kommunikationsverfahren, wobei das Verfahren umfasst:
Senden (S201), durch eine Positionierungseinrichtung, eines ersten Funksignals;
Empfangen (S202), durch die Positionierungseinrichtung, mindestens eines Antwortsignals auf das erste Funksignal von mindestens einer antwortenden Vorrichtung; und
Senden (S203), durch die Positionierungseinrichtung, erster Entfernungsmessinformationen, die dem mindestens einen Antwortsignal entsprechen, an eine Steuereinrichtung, wobei
die ersten Entfernungsmessinformationen einen Abstand von der Positionierungseinrichtung zu der mindestens einen antwortenden Vorrichtung angeben,
wobei die mindestens eine antwortende Vorrichtung einen Fahrzeugschlüssel und ein Zielobjekt umfasst; und
das Empfangen, durch die Positionierungseinrichtung, mindestens eines Antwortsignals auf das erste Funksignal von mindestens einer antwortenden Vorrichtung umfasst:
Empfangen, durch die Positionierungseinrichtung, eines ersten Funkantwortsignals von dem Fahrzeugschlüssel; und
Empfangen, durch die Positionierungseinrichtung, eines zweiten Funkantwortsignals von dem Zielobjekt, wobei
die ersten Entfernungsmessinformationen einen ersten Abstand von der Positionierungseinrichtung zu dem Fahrzeugschlüssel und einen zweiten Abstand von der Positionierungseinrichtung zu dem Zielobjekt angeben.

2. Verfahren nach Anspruch 1, wobei das Verfahren ferner Folgendes umfasst:
Bestimmen, durch die Steuereinrichtung, dass eine Differenz zwischen dem ersten Abstand und dem zweiten Abstand größer oder gleich einem ersten Schwellenwert ist, um ein Erinnerungsanzeigesignal auszugeben, wobei das Erinnerungsanzeigesignal dazu verwendet wird, mindestens eine Ausgabeeinrichtung zum Ausgeben eines Erinnerungssignals anzuweisen.

3. Verfahren nach Anspruch 1, wobei die mindestens eine antwortende Vorrichtung ein Zielobjekt umfasst; und
das Empfangen, durch die Positionierungseinrichtung, mindestens eines Antwortsignals auf das erste Funksignal von mindestens einer antwortenden Vorrichtung umfasst:
Empfangen, durch die Positionierungseinrichtung, eines zweiten Funkantwortsignals von dem Zielobjekt, wobei
die ersten Entfernungsmessinformationen einen zweiten Abstand von der Positionierungseinrichtung zu dem Zielobjekt angeben.

4. Verfahren nach Anspruch 3, wobei das Verfahren ferner Folgendes umfasst:
Bestimmen, durch die Steuereinrichtung, dass der zweite Abstand größer oder gleich einem zweiten Schwellenwert ist, um ein Erinnerungsanzeigesignal auszugeben, wobei das Erinnerungsanzeigesignal dazu verwendet wird, mindestens eine Ausgabeeinrichtung zum Ausgeben eines Erinnerungssignals anzuweisen.

5. Verfahren nach einem der Ansprüche 1 bis 4, wobei das Senden, durch eine Positionierungseinrichtung, eines ersten Funksignals Folgendes umfasst:
Senden, durch die Positionierungseinrichtung, des ersten Funksignals als Reaktion auf eine erste Entfernungsmessanforderung, wobei
die erste Entfernungsmessanforderung von einer zentralen Steuervorrichtung stammt.

6. Verfahren nach einem der Ansprüche 1 bis 4, wobei das Senden, durch eine Positionierungseinrichtung, eines ersten Funksignals Folgendes umfasst:
Senden, durch die Positionierungseinrichtung, des ersten Funksignals auf Grundlage einer ersten Periode oder Senden des ersten Funksignals gemäß einer ersten Regel.

7. Verfahren nach einem der Ansprüche 1 bis 6, wobei die ersten Entfernungsmessinformationen eines oder mehrere der folgenden Inhaltselemente umfassen:
Zeitpunkt, zu dem die Positionierungseinrichtung das erste Funksignal sendet;
Zeitpunkt, zu dem die mindestens eine antwortende Vorrichtung das erste Funksignal empfängt;
Zeitpunkt, zu dem die Positionierungseinrichtung das mindestens eine Antwortsignal empfängt;
Zeitpunkt, zu dem die mindestens eine antwortende Vorrichtung das mindestens eine Antwortsignal sendet;
mindestens ein Zeitintervall zwischen dem Zeitpunkt, zu dem die Positionierungseinrichtung das erste Funksignal sendet, und dem Zeitpunkt, zu dem die Positionierungseinrichtung das mindestens eine Antwortsignal empfängt; und
mindestens ein Zeitintervall zwischen dem Zeitpunkt, zu dem die mindestens eine antwortende Vorrichtung das erste Funksignal empfängt, und dem Zeitpunkt, zu dem die mindestens eine antwortende Vorrichtung das mindestens eine Antwortsignal sendet.

8. Verfahren nach einem der Ansprüche 1 bis 7, wobei das mindestens eine Antwortsignal einen oder mehrere der folgenden Inhalte angibt:
den Zeitpunkt, zu dem die mindestens eine antwortende Vorrichtung das erste Funksignal empfängt;
den Zeitpunkt, zu dem die mindestens eine antwortende Vorrichtung das mindestens eine Antwortsignal sendet; und
das mindestens eine Zeitintervall zwischen dem Zeitpunkt, zu dem die mindestens eine antwortende Vorrichtung das erste Funksignal empfängt, und dem Zeitpunkt, zu dem die mindestens eine antwortende Vorrichtung das mindestens eine Antwortsignal sendet.

9. Verfahren nach einem der Ansprüche 1 bis 8, wobei das Zielobjekt ein intelligentes Endgerät oder einen Sitz mit einem Drahtloskommunikationsmodul umfasst.

10. Kommunikationsverfahren, wobei das Verfahren umfasst:
Empfangen, durch eine Steuereinrichtung, erster Entfernungsmessinformationen von einer Positionierungseinrichtung, wobei die ersten Entfernungsmessinformationen einen Abstand von der Positionierungseinrichtung zu mindestens einer antwortenden Vorrichtung angeben; und
Ausgeben, durch die Steuereinrichtung, eines Erinnerungsanzeigesignals auf Grundlage der ersten Entfernungsmessinformationen, wobei das Erinnerungsanzeigesignal dazu verwendet wird, mindestens eine Ausgabeeinrichtung zum Ausgeben eines Erinnerungssignals anzuweisen,
wobei die mindestens eine antwortende Vorrichtung einen Fahrzeugschlüssel und ein Zielobjekt umfasst und die ersten Entfernungsmessinformationen einen ersten Abstand von der Positionierungseinrichtung zu dem Fahrzeugschlüssel und einen zweiten Abstand von der Positionierungseinrichtung zu dem Zielobjekt angeben.

11. Verfahren nach Anspruch 10, wobei das Ausgeben, durch die Steuereinrichtung, eines Erinnerungsanzeigesignals auf Grundlage der ersten Entfernungsmessinformationen Folgendes umfasst:
Bestimmen, durch die Steuereinrichtung, dass eine Differenz zwischen dem ersten Abstand und dem zweiten Abstand größer oder gleich einem ersten Schwellenwert ist, um das Erinnerungsanzeigesignal auszugeben.

12. Kommunikationseinrichtung (600, 700, 800), umfassend einen Prozessor (802) und eine Kommunikationsschnittstelle, wobei die Kommunikationsschnittstelle dazu ausgelegt ist, ein Signal von einer anderen Kommunikationseinrichtung (600, 700, 800) als der Kommunikationseinrichtung (600, 700, 800) zu empfangen und das Signal an den Prozessor (802) zu übertragen oder ein Signal von dem Prozessor (802) an eine andere Kommunikationseinrichtung (600, 700, 800) als die Kommunikationseinrichtung (600, 700, 800) zu senden; und wobei der Prozessor (802) dazu ausgelegt ist, unter Verwendung einer Logikschaltung oder durch Ausführen von Codeanweisungen das Verfahren nach einem der Ansprüche 1 bis 9 oder das Verfahren nach Anspruch 10 oder 11 zu implementieren.

13. Computerlesbares Speichermedium, wobei das computerlesbare Speichermedium ein Computerprogramm speichert und, wenn das Computerprogramm ausgeführt wird, das Verfahren nach einem der Ansprüche 1 bis 9 oder das Verfahren nach Anspruch 10 oder 11 implementiert wird.

## Revendications

1. Procédé de communication, le procédé comprenant :
l'envoi (S201), par un appareil de positionnement, d'un premier signal radio ;
la réception (S202), par l'appareil de positionnement, d'au moins un signal de réponse qui répond au premier signal radio et qui provient d'au moins un dispositif répondant ; et
l'envoi (S203), par l'appareil de positionnement, de premières informations de mesure de distance correspondant à l'au moins un signal de réponse à un appareil de commande, dans lequel
les premières informations de mesure de distance indiquent une distance entre l'appareil de positionnement et l'au moins un dispositif répondant,
l'au moins un dispositif répondant comprend une clé de véhicule et un objet cible ; et
la réception, par l'appareil de positionnement, d'au moins un signal de réponse qui répond au premier signal radio et qui provient d'au moins un dispositif répondant comprend :
la réception, par l'appareil de positionnement, d'un premier signal radio de réponse provenant de la clé de véhicule ; et
la réception, par l'appareil de positionnement, d'un deuxième signal radio de réponse provenant de l'objet cible,
les premières informations de mesure de distance indiquant une première distance entre l'appareil de positionnement et la clé de véhicule et une deuxième distance entre l'appareil de positionnement et l'objet cible.

2. Procédé selon la revendication 1, le procédé comprenant en outre :
la détermination, par l'appareil de commande, qu'une différence entre la première distance et la deuxième distance est supérieure ou égale à un premier seuil, afin d'émettre un signal d'indication de rappel, le signal d'indication de rappel étant utilisé pour indiquer à au moins un appareil d'émission d'émettre un signal de rappel.

3. Procédé selon la revendication 1, dans lequel l'au moins un dispositif répondant comprend un objet cible ; et
la réception, par l'appareil de positionnement, d'au moins un signal de réponse qui répond au premier signal radio et qui provient d'au moins un dispositif répondant comprend :
la réception, par l'appareil de positionnement, d'un deuxième signal radio de réponse provenant de l'objet cible,
les premières informations de mesure de distance indiquant une deuxième distance entre l'appareil de positionnement et l'objet cible.

4. Procédé selon la revendication 3, le procédé comprenant en outre :
la détermination, par l'appareil de commande, que la deuxième distance est supérieure ou égale à un deuxième seuil, afin d'émettre un signal d'indication de rappel, le signal d'indication de rappel étant utilisé pour indiquer à au moins un appareil d'émission d'émettre un signal de rappel.

5. Procédé selon l'une quelconque des revendications 1 à 4, dans lequel l'envoi, par un appareil de positionnement, d'un premier signal radio comprend :
l'envoi, par l'appareil de positionnement, du premier signal radio en réponse à une première requête de mesure de distance,
la première requête de mesure de distance provenant d'un contrôleur central.

6. Procédé selon l'une quelconque des revendications 1 à 4, dans lequel l'envoi, par un appareil de positionnement, d'un premier signal radio comprend :
l'envoi, par l'appareil de positionnement, du premier signal radio sur la base d'une première période, ou l'envoi du premier signal radio en fonction d'une première règle.

7. Procédé selon l'une quelconque des revendications 1 à 6, dans lequel les premières informations de mesure de distance comprennent un ou plusieurs des éléments de contenu suivants :
le moment auquel l'appareil de positionnement envoie le premier signal radio ;
le moment auquel l'au moins un dispositif répondant reçoit le premier signal radio ;
le moment auquel l'appareil de positionnement reçoit l'au moins un signal de réponse ;
le moment auquel l'au moins un dispositif répondant envoie l'au moins un signal de réponse ;
au moins un intervalle de temps entre le moment auquel l'appareil de positionnement envoie le premier signal radio et le moment auquel l'appareil de positionnement reçoit le signal de réponse ; et
au moins un intervalle de temps entre le moment auquel l'au moins un dispositif répondant reçoit le premier signal radio et le moment auquel l'au moins un dispositif répondant envoie l'au moins un signal de réponse.

8. Procédé selon l'une quelconque des revendications 1 à 7, dans lequel l'au moins un signal de réponse indique un ou plusieurs des éléments de contenu suivants :
le moment auquel l'au moins un dispositif répondant reçoit le premier signal radio ;
le moment auquel l'au moins un dispositif répondant envoie l'au moins un signal de réponse ; et
l'au moins un intervalle de temps entre le moment auquel l'au moins un dispositif répondant reçoit le premier signal radio et le moment auquel l'au moins un dispositif répondant envoie l'au moins un signal de réponse.

9. Procédé selon l'une quelconque des revendications 1 à 8, dans lequel l'objet cible comprend un terminal intelligent ou un siège comportant un module de communication sans fil.

10. Procédé de communication, le procédé comprenant :
la réception, par un appareil de commande, de premières informations de mesure de distance provenant d'un appareil de positionnement, les premières informations de mesure de distance indiquant une distance entre l'appareil de positionnement et au moins un dispositif répondant ; et
l'émission, par l'appareil de commande, d'un signal d'indication de rappel sur la base des premières informations de mesure de distance, le signal d'indication de rappel étant utilisé pour indiquer à au moins un appareil d'émission d'émettre un signal de rappel,
l'au moins un dispositif répondant comprenant une clé de véhicule et un objet cible, et les premières informations de mesure de distance indiquant une première distance entre l'appareil de positionnement et la clé de véhicule et une deuxième distance entre l'appareil de positionnement et l'objet cible.

11. Procédé selon la revendication 10, dans lequel l'émission, par l'appareil de commande, d'un signal d'indication de rappel sur la base des premières informations de mesure de distance comprend :
la détermination, par l'appareil de commande, qu'une différence entre la première distance et la deuxième distance est supérieure ou égale à un premier seuil, afin d'émettre le signal d'indication de rappel.

12. Appareil de communication (600, 700, 800), comprenant un processeur (802) et une interface de communication, l'interface de communication étant conçue pour : recevoir un signal provenant d'un appareil de communication (600, 700, 800) différent de l'appareil de communication (600, 700, 800), et transmettre le signal au processeur (802), ou envoyer un signal provenant du processeur (802) à un appareil de communication (600, 700, 800) différent de l'appareil de communication (600, 700, 800) ; et le processeur (802) étant conçu pour mettre en œuvre, en utilisant un circuit logique ou en exécutant des instructions de code, le procédé selon l'une quelconque des revendications 1 à 9, ou le procédé selon la revendication 10 ou 11.

13. Support de stockage lisible par ordinateur, le support de stockage lisible par ordinateur stockant un programme informatique, et lorsque le programme informatique est exécuté, le procédé selon l'une quelconque des revendications 1 à 9 étant mis en œuvre ou le procédé selon la revendication 10 ou 11 étant mis en œuvre.
